# EUROPEAN PATENT SPECIFICATION

(11) **EP 1 324 255 B1**
(45) Date of publication and mention of the grant of the patent: **14.11.2007**
(21) Application number: 02006195.8
(22) Date of filing: 19.03.2002
(51) Int. Cl.: G06K 7/00

(54) **Range extension for RFID hand-held mobile computers**
Bereichserweiterung für RFID tragbare Computer
Extension de portée pour lecteurs portables d'étiquettes d'identification radio fréquence

(30) Priority: 13.12.2001 US 21843
(43) Date of publication of application: 02.07.2003
(73) Proprietor: Symbol Technologies, Inc., Holtsville, New York 11742-1300 (US)
(72) Inventor: Bridgelall, Raj, Mount Sinai, New York 11766 (US)
(74) Representative: Wagner, Karl H.

(56) References cited:
- WO-A-01/94967
- US-A- 5 825 298
- US-B1- 6 264 106
- US-B1- 6 318 631

## Description

### BACKGROUND OF THE INVENTION

Radio Frequency Identification (RFID) has become an important implementation of an Automatic Identification technique. The object of any RFID system is to carry data suitable transponders, generally known as tags, and to retrieve data, by machine-readable means, at a suitable time and place to satisfy particular application needs. Data within a tag may provide identification for an item in manufacture, goods in transit, a location, the identity of a vehicle, an animal or individual. By including additional data the prospect is provided for supporting applications through item specific information or instructions immediately available on reading the tag. For example, the color of paint for a car body entering a paint spray area on the production line, the set-up instructions for a flexible manufacturing cell or the manifest to accompany a shipment of goods.

RFID technologies vary widely in frequency, packaging, performance, and cost. There are many established applications. A system requires, in addition to tags, a means of reading or interrogating the tags and some means of communicating the data to a host computer or information management system. A system will also include a facility for entering or programming data into the tags, if this is not undertaken at source by the manufacturer.

Communication of data between tags and a reader is by wireless communication. Two methods distinguish and categorize RFID systems, one based upon close proximity electromagnetic or inductive coupling and one based upon propagating electromagnetic waves. Coupling is via 'antenna' structures forming an integral feature in both tags and readers. While the term antenna is generally considered more appropriate for propagating systems it is also loosely applied to inductive systems.

Transmitting data is subject to the influences of the media or channels through which the data has to pass, including the air interface. Noise, interference and distortion are the sources of data corruption that arise in practical communication channels that must be guarded against in seeking to achieve error free data recovery. Moreover, the nature of the data communication processes, being asynchronous in nature, requires attention to the form in which the data is communicated. Structuring the bit stream to accommodate these needs is often referred to as channel encoding and although transparent to the user of an RFID system the coding scheme applied appears in system specifications. Various encoding schemes can be distinguished, each exhibiting different performance features.

To transfer data efficiently via the air interface or space that separates the two communicating components requires the data to be superimposed upon a rhythmically varying (sinusoidal) field or carrier wave. This process of superimposition is referred to as modulation, and various schemes are available for this purposes, each having particular attributes that favor their use. They are essentially based upon changing the value of one of the primary features of an alternating sinusoidal source, its amplitude, frequency or phase in accordance with the data carrying bit stream. On this basis one can distinguish amplitude shift keying (ASK), frequency shift keying (FSK) and phase shift keying (PSK). Based on these limitations, the operational distance for inductively coupled RFID tags such as those operating at 125 kHz and 13.56 MHz cannot be greater than approximately 12.7 cm (5 inches) when the reader and antenna are fully integrated into a small hand-held mobile computer.

Nevertheless, many applications require hand-held readers that will be capable of interrogating RFID tags at distances beyond 30.5 cm (12 inches). The operational distance for inductively coupled RFID tags such those operating at 125 kHz and 13.56 MHz are directly proportional to the antenna (coil) size. For example, a typical design will generally provide interrogation distances between 35% to 200% of the antenna loop diameter. Therefore, in order to obtain 30.5 cm (12 inches) of read range on a typical credit card size RFID tag, the antenna can be approximately 15.25 cm (six inches) in diameter at best. Integrating such a large antenna will grow the size of the hand-held mobile computer to a point where it is no longer practical for use over an extended period of time.

Even if such a large antenna were integrated, it must be maximally separated from the metallic parts within the mobile computer so as to avoid magnetic field dampening. Examples of metallic parts are scan engine opto-mechanical chassis, mounting brackets, electronic packaging, flex connectors, electromagnetic shielding, etc. In addition, a large battery will be necessary in order to sustain an adequately large current in the RFID antenna that will generate the required magnetic field strength for interrogating tags out to the desired distances.

The three key requirements of maximally large antenna, clearance from metallic components, and high current generating capability over the operational life of the device make it impractical under current design restraints to construct a small and ergonomically correct mobile computer.

There is, therefore, a need in the art for an apparatus, method, and system that will enable a hand held mobile computer to use RFID for distances from beyond 30.5 cm (12 inches) while still maintaining its ergonomic correctness.

US-A-5,825,298 discloses a radio frequency transponder method for identifying geographical locations such as survey traverse points, and was used as a basis for the preamble of the independent claims. More particularly, the document discloses an identification system including a device for locating land and construction survey traverse control points, other survey sites or any location marking the position of a place or thing comprised of a read only or read/write radio frequency transponder enclosed within a durable watertight container including a stake which may be driven into the earth, a read/write reader assembly and a portable computer. The radio frequency transponder may be written to or read by a non-contacting radio frequency read/write reader assembly. The reader assembly connected to a portable computer through a data interface means such as RS232 or RS422/485. The stake or other container may be buried under any non-metallic material or otherwise not visible as long as it is within the operating range of the reader assembly. Each radio frequency transponder will have a unique identification code imprinted in its memory and, on the read/write transponders, may have additional information written into its memory. The reader assembly requires a 12V DC power supply which may be self contained or an external battery pack. The transponder requires no power while in the standby non-excited state.

Further, with regard to the prior art, attention is drawn to US-A-5,280,159 and US-A-6,517,000.

### Summary of the Invention

The present invention provides for a system as set forth in claim 1 and a method as set forth in claim 9. Preferred embodiments of the present invention may be gathered from the dependent claims.

The present invention provides for a system and method comprising a standard modular attachment (i.e. sled) for the computer that may be used only when RFID interrogation is desired. The sled may carry an antenna loop, integrated RFID reader electronics, and a dedicated battery that are separate from the actual mobile computer.

### BRIEF DESCRIPTION OF THE DRAWINGS

The accompanying drawings, which are incorporated in and constitute a part of this specification, illustrate one embodiment of the invention and together with the description serve to explain the principles of the invention.
Figure 1 illustrates a block diagram of a typical RFID system.
Figure 2A illustrates an interior view of a RFID sled coupled with a handheld computer which is an embodiment of the present invention.
Figure 2B illustrates an exterior view of a RFID sled coupled with a handheld computer which is an embodiment of the present invention.
Figure 3 illustrates a system-level view of an RFID sled coupled with a handheld computer which is an embodiment of the present invention.

### DETAILED DESCRIPTION

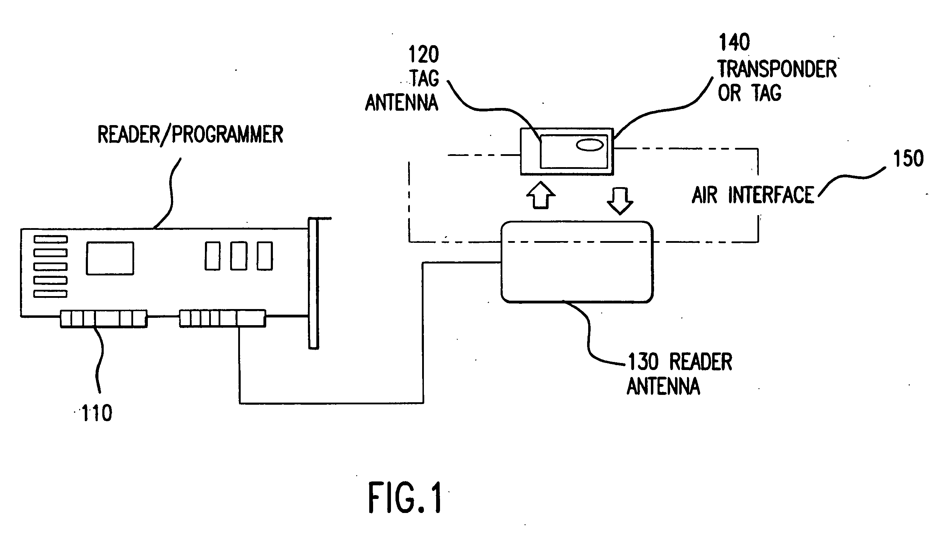

Turning to Figure 1, shown are the typical components of an RFID system, including a reader/programmer access card 110 that interfaces with a host computer or other device (not shown) and a reader antenna 130. Using power provided by the reader/programmer 110, the reader/antenna transmits signals through the air interface 150. The transponder or tag 140 contains a tag antenna 120 which, via the air interface 150, communicates with the reader antenna 130.

The tag 140 responds to a transmitted or communicated request for the data it carries, the mode of communication between the reader and the tag being by wireless means across the space or air interface 150 between the two. Tags 140 may be fabricated as low power integrated circuits suitable for interfacing to external coils, or utilizing "coil-on-chip" technology, for data transfer and power generation (passive mode). The tag 140 memory may comprise read-only (ROM), random access (RAM) and non-volatile programmable memory for data storage depending upon the type and sophistication of the device. The ROM-based memory is used to accommodate security data and the transponder operating system instructions which, in conjunction with the processor or processing logic deals with the internal "house-keeping" functions such as response delay timing, data flow control and power supply switching. The RAM-based memory is used to facilitate temporary data storage during transponder interrogation and response. The non-volatile programmable memory may take various forms, electrically erasable programmable read only memory (EEPROM) being typical. It is used to store the transponder data and needs to be non-volatile to ensure that the data is retained when the device is in its quiescent or power-saving "sleep" state.

Data buffers are further components of memory, used to temporarily hold incoming data following demodulation and outgoing data for modulation and interface with the transponder antenna. The interface circuitry provides the facility to direct and accommodate the interrogation field energy for powering purposes in passive transponders and triggering of the transponder response. Where programming is accommodated facilities must be provided to accept the data modulated signal and perform the necessary demodulation and data transfer processes.

For tags 140 to work they require power, even though the levels are invariably very small (micro to milliwatts). Tags140 are either passive or active, the designation being determined entirely by the manner in which the device derives its power. Active tags are powered by an internal battery and are typically read/write devices. They usually contain a cell that exhibits a high power-to-weight ratio and are usually capable of operating over a temperature range of-50°C to +70°C. The use of a battery means that a sealed active transponder has a finite lifetime. However, a suitable cell coupled to suitable low power circuitry can ensure functionality for as long as ten or more years, depending upon the operating temperatures, read/write cycles and usage. The trade-off is greater size and greater cost compared with passive tags. In general terms, active transponders allow greater communication range than can be expected for passive devices, better noise immunity and higher data transmissions rates when used to power a higher frequency response mode.

Passive tags operate without an internal battery source, deriving the power to operate from the field generated by the reader. Passive tags are consequently much lighter than active tags, less expensive, and offer a virtually unlimited operational lifetime. The trade-off is that they have shorter read ranges than active tags and require a higher-powered reader. Passive tags are also constrained in their capacity to store data and the ability to perform well in noisy radio environments. Sensitivity and orientation performance may also be constrained by the limitation on available power. Despite these limitations passive transponders offer advantages in terms of cost and longevity. They have an almost indefinite lifetime and are generally lower on price than active transponders.

Data stored in data carriers invariable require some organization and additions, such as data identifiers and error detection bits, to satisfy recovery needs. This process is often referred to as source encoding. Standard numbering systems, such as UCC/EAN and associated data defining elements may also be applied to data stored in tags. The amount of data will of course depend on application and require an appropriate tag to meet the need Identifiers, in which a numeric or alphanumeric string is stored for identification purposes or as an access key to data stored elsewhere in a computer or information management system, or portable data files, in which information can be organized, for communication or as a means of initiating actions without recourse to, or in combination with, data stored elsewhere.

In terms of data capacity tags 140 can be obtained that satisfy needs from single bit to kilobits. The single bit devices are essentially for surveillance purposes. Retail electronic article surveillance (EAS) is the typical application for such devices, being used to activate an alarm when detected in the interrogating field. They may also be used in counting applications. Devices characterized by data storage capacities up to 128 bits are sufficient to hold a serial or identification number together, possibly, with parity check bits. Such devices may be manufacturer or user programmable. Tags 140 with data storage capacities up to 512 bits, are invariably user programmable, and suitable for accommodating identification and other specific data such as serial numbers, package content, key process instructions or possibly results of earlier interrogation/response transactions.

Tags 140 characterized by data storage capacities of around 64 kilobits may be regarded as carriers for portable data files. With increased capacity the facility can also be provided for organizing data into fields or pages that may be selectively interrogated during the reading process. Depending upon the type of memory a tag 140 contains the data carried may be read-only, write once read many (WORM) or read/write. Read-only tags are invariably low capacity devices programmed at source, usually with an identification number. WORM devices are user programmable devices. Read/write devices are also user-programmable but allowing the user to change data stored in a tag. Portable programmers may be recognized that also allow in-field programming of the tag while attached to the item being identified or accompanied.

The tag antenna 120 is the means by which the device senses the interrogating field and, where appropriate, the programming field and also serves as the means of transmitting the transponder response to interrogation

The reader antenna 130 can differ quite considerably in complexity, depending upon the type of tags 140 being supported and the functions to be fulfilled. However, the overall function is to provide the means of communicating with the tags and facilitating data transfer. Functions performed by the reader may include quite sophisticated signal conditioning, parity error checking and correction. Once the signal from a transponder has been correctly received and decoded, algorithms may be applied to decide whether the signal is a repeat transmission, and may then instruct the transponder to cease transmitting. This is known as the "Command Response Protocol" and is used to circumvent the problem of reading multiple tags in a short space of time. Using interrogators in this way is sometimes referred to as "Hands Down Polling". An alternative, more secure, but slower tag polling technique is called "Hands Up Polling" which involves the interrogator looking for tags with specific identities, and interrogating them in turn. This is contention management, and a variety of techniques have been developed to improve the process of batch reading. A further approach may use multiple readers, multiplexed into one interrogator, but with attendant increases in costs.

Transponder programmers are the means by which data is delivered to write once, read many (WORM) and read/write tags. Programming is generally carried out off-line, at the beginning of a batch production run, for example.

For some systems re-programming may be carried out on-line, particularly if it is being used as an interactive portable data file within a production environment, for example. Data may need to be recorded during each process. Removing the transponder at the end of each process to read the previous process data, and to program the new data, would naturally increase process time and would detract substantially from the intended flexibility of the application. By combining the functions of a reader/interrogator and a programmer, data may be appended or altered in the transponder as required, without compromising the production line.

The range over which the programming can be achieved is generally less than the read range and in some systems near contact positioning is required. Programmers are also generally designed to handle a single tag at a time. However, developments are now satisfying the need for selective programming of a number of tags present within the range of the programmer.

RFID systems as shown in Figure 1 may be roughly grouped into four categories: AS (Electronic Article Surveillance) systems, Portable Data Capture systems, Networked systems, and Positioning systems. Electronic Article Surveillance systems are typically a one bit system used to sense the presence/absence of an item. The large use for this technology is in retail stores where each item is tagged and a large antenna readers are placed at each exit of the store to detect unauthorized removal of the item (theft). Portable data capture systems are characterized by the use of portable data mobile computers with integral RFID readers and are used in applications where a high degree of variability in sourcing required data from tagged items may be exhibited. The hand-held readers/portable data mobile computers capture data which is then either transmitted directly to a host information management system via a radio frequency data communication (RFDC) link or held for delivery by line-linkage to the host on a batch processing basis. Networked systems applications can generally be characterized by fixed position readers deployed within a given site and connected directly to a networked information management system. The transponders are positioned on moving or moveable items, or people, depending upon application. Positioning systems use transponders to facilitate automated location and navigation support for guided vehicles. Readers are positioned on the vehicles and linked to an on-board computer and RFDC link to the host information management system. The transponders are embedded in the floor of the operating environment and programmed with appropriate identification and location data. The reader antenna is usually located beneath the vehicle to allow closer proximity to the embedded transponders.

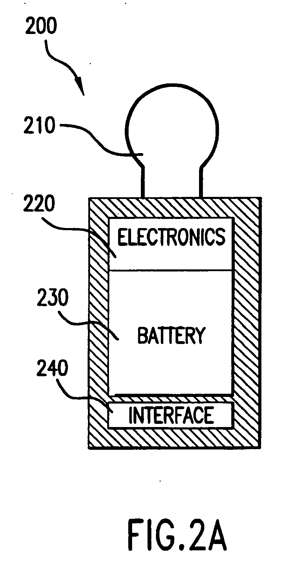

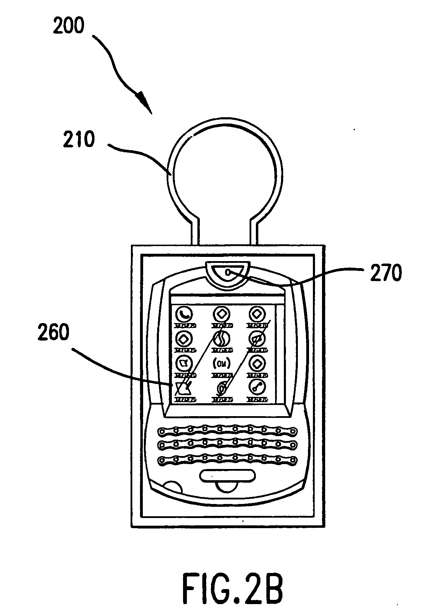

As the typical hand-held mobile computer is not used exclusively for RFID interrogation, the present invention does not call for a mobile computer with a large integrated RFID reader. Instead, the reader can be constructed as a standard modular attachment (e.g. sled) for the mobile computer and it may be used only when RFID interrogation is desired. Figure 2A shows an embodiment of the present invention whereby the sled 200 carries an antenna loop 210, integrated RFID reader electronics 220, a dedicated battery 230, and an interface 240 to associate with the mobile computer. These will all be separate from the actual hand-held mobile computer. Figure 2B shows an exterior view of the mobile computer 260 accompanied by the sled 200, with the antenna loop 210 visible.

The mobile computer 260 may also include an integrated bar code scanner 270. As Within this scanner, a light source, such as a laser, generates a light beam which is directed by optical components along a light path toward a bar code symbol. The laser light beam is repetitively scanned by a scanning component, such as an oscillating mirror situated in the beam path, to sweep a beam spot beam across the bar code symbol. A photodetector detects light of variable intensity reflected or scattered from the symbol and generates electrical signals indicative of the detected light. These electrical signals are decoded and into data representative of the data encoded in the symbol. The integrated bar code scanner 270 may also be located on the sled 200.

Data gathered by the mobile computer 260 may be stored and transmitted at a later point to other parts of a network (batch mode) or transferred to the network soon after acquisition using a pre-installed wireless network. The assignee of the present invention supplies a wireless data communications systems known as the Spectrum 24^{®} System, which follows the communications protocol of IEEE Standard 802.11. In the system as implemented, mobile units are in data communication with a central computer through access points. The access points communicate with the computer over an Ethernet wired network. The transmission data and the reception data may use a TCP/IP protocol, and the wired network may also be connected to the Internet. Each of the mobile units associates itself with one of the access points. In order to maintain order and reduce radio communications each access point must determine which of the communications received over the Ethernet link from the central computer is destined for a mobile unit associated with that particular access point.

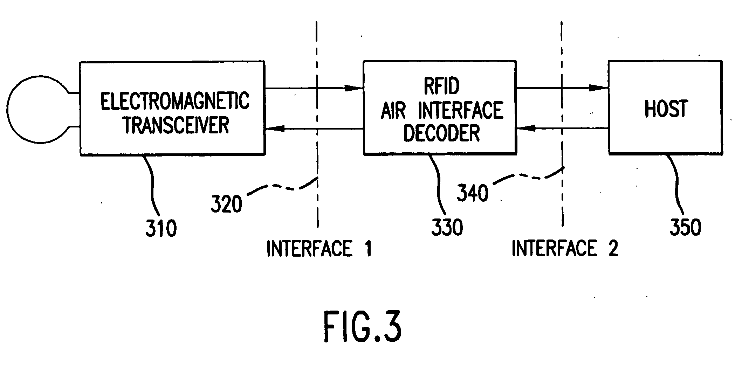

The electronics of the sled may be partitioned in one of several ways as shown in Figure 3. The electro-magnetic transceiver 310 will produce signals that are compatible with the standard interface of the sled at "interface 1" 320. The RFID air interface decoder 330 must, therefore, be accommodated within the mobile computer 260 itself. Alternatively, the RFID decoding can be done within the sled 200 and only the decoded data will be transmitted to the mobile computer (host) 350 using the standard interface 340 (interface 2) of the sled.

The advantage of the first approach is that the RFID decoding can take advantage of the powerful microcontroller/microprocessor of the mobile computer. A second advantage is that this approach allows for a second but reduced performance RFID electromagnetic transceiver that can be integrated within the mobile computer itself. Both transceivers will have an identical decoder. A third advantage of this approach is that it is more cost effective when the reduced performance but integrated RFID reader is also desirable.

The advantage of the second approach is that the entire RFID functionality is separate and modular whereby the mobile computer need not support RFID decoding logic or software. A second advantage of the second approach is that any host interface can be easily accommodated via the RFID decoder microelectronics, without the need to add specialized logic to handle a particular host interface.

It is to be understood that both the foregoing description are exemplary and explanatory only and are not restrictive of the invention, as claimed.

## Claims

1. A system comprising a device (200) suitable for scanning a radio frequency identification tag (170) for identification data, said device including a battery (230), circuitry(220) capable of performing radio frequency identification functionality, and a second modular attachment interface (240); said second modular attachment interface being capable of association with a first modular attachment interface, said first modular attachment interface being included in a mobile computer (260), **characterized in that** the device is a sled device suitable for holding the mobile computer.

2. The system as in claim 1,wherein the device (200) further comprises:
a scanner (270) for scanning optical codes; and
a programmed controller for controlling the scanner and receiving scanned data therefrom.

3. The system as in claim 1, wherein the circuitry (220) capable of performing radio frequency identification functionality comprises an electromagnetic transceiver (310).

4. The system as in claim 3, wherein the circuitry (220) capable of performing radio frequency identification functionality comprises a radio frequency identification air interface decoder (330).

5. The system as in claim 1, further comprising a mobile computer (260), the mobile computer (260) including a first modular attachment interface, and wherein the modular attachment interface (240) of the device (200) is a second modular attachment interface capable of association with the first modular attachment interface.

6. The system as in claim 1, further comprising at least one radio frequency identification tag (140) and wherein the device (200) is capable of scanning the at least one radio frequency identification tag (140) when the device (200) and the at least one identification tag (140) are beyond 30.5 cm (12 inches) apart.

7. The system as in claim 1, further comprising:
a wired network;
one or more access points;
wherein the one or more access points are capable of transmitting transmission data from the wired network to one or more mobile computers via a wireless medium and receiving reception data from the one or more mobile computers to the wired network via the wireless medium; and
wherein the one or more access points form a transmission area, the transmission area including a space where association to at least one of the one or more access points is possible by at least one of the one or more mobile computers.

8. The system as in claim 7, wherein the transmission data and the reception data use a TCP/IP protocol, and wherein the wired network is connected to the Internet.

9. A method of processing data, comprising coupling a mobile computer (260), the mobile computer (260) including a first modular attachment interface, to a device (200) including: a battery (230), circuitry (220) capable of performing radio frequency identification functionality, and a second modular attachment interface (240) capable of association with the first modular attachment interface; and scanning a radio frequency identification tag (140) for identification data; **characterized in that** the device (200) is a sled device suitable for holding the mobile computer (260).

10. The method as in claim 9, wherein the scanning a radio frequency identification tag (140) for identification data occurs when the mobile computer (260) and the identification tag (140) are beyond 30.5 cm (12 inches) apart.

11. The method as in claim 9 or 10, further comprising transmitting the identification data to a wired computer network via a wireless medium.

12. The method as in claim 11, wherein the wired computer network is connected to the Internet and the transmitting the identification data to a wired computer network via a wireless medium uses a TCP/IP protocol.

## Patentansprüche

1. Ein System das eine Vorrichtung (200) aufweist, die zum Scannen eines Radiofrequenzidentifikations-Tags (170) zur Identifizierung von Daten geeignet ist, wobei die Vorrichtung Folgendes aufweist: eine Batterie (230), eine Schaltung (220), die imstande ist eine Radiofrequenzidentifikationsfunktionalität auszuführen, und eine zweite modulare Anbringungsschnittstelle (240), wobei die zweite modulare Anbringungsschnittstelle imstande ist, mit einer ersten modularen Anbringungsschnittstelle verbunden zu werden, wobei die erste modulare Anbringungsschnittstelle in einem mobilen Computer (260) enthalten ist, **dadurch gekennzeichnet dass** die Vorrichtung eine Sled- bzw. Schlittenvorrichtung ist, die geeignet ist den mobilen Computer zu halten.

2. System gemäß Anspruch 1, wobei die Vorrichtung (200) ferner Folgendes aufweist:
einen Scanner (270) zum Scannen optischer Codes; und
eine programmierte Steuervorrichtung zum Steuern des Scanners und zum Empfangen der gescannten Daten von diesem.

3. System gemäß Anspruch 1, wobei die Schaltung (220), die imstande ist, die Radiofrequenzidentifikationsfunktionalität auszuführen, einen elektromagnetischen Transceiver (310) aufweist.

4. System gemäß Anspruch 1, wobei die Schaltung (220), die imstande ist, die Radiofrequenzidentifikationsfunktionalität auszuführen, einen Radiofrequenzidentifikationsluftschnittstellendecodierer (330) aufweist.

5. System gemäß Anspruch 1, das ferner einen mobilen Computer (260) aufweist, wobei der mobile Computer (260) eine erste modulare Anbringungsschnittstelle aufweist, und wobei die modulare Anbringungsschnittstelle (240) der Vorrichtung (200) eine zweite modulare Anbringungsschnittstelle ist, die eine Verbindung mit der ersten modularen Anbringungsschnittstelle ermöglicht.

6. System gemäß Anspruch 1, das ferner zumindest einen Radiofrequenzidentifikations- (RFID-) Tag (140) aufweist und wobei die Vorrichtung (200) imstande ist, den zumindest einen Radiofrequenzidentifikations-Tag (140) zu scannen, wenn die Vorrichtung (200) und der zumindest eine Identifikations-Tag (140) über 30,5 cm (12 Zoll) voneinander beabstandet sind.

7. System gemäß Anspruch 1, das ferner Folgendes aufweist:
ein Kabelnetzwerk;
einen oder mehrere Access Points bzw. Zugangsknoten;
wobei der eine oder die mehreren Zugangsknoten imstande sind, Übertragungsdaten von dem Kabelnetzwerk zu einem oder mehreren mobilen Computern über ein drahtloses Medium zu übertragen, sowie Empfangsdaten von dem einen oder mehreren mobilen Computern an das Kabelnetzwerk über das drahtlose Medium zu empfangen; und
wobei der eine oder mehrere Zugangsknoten einen Übertragungsbereich bilden, wobei der Übertragungsbereich einen Raum umfasst, wo die Verbindung mit zumindest einem der einen oder mehreren Zugangsknoten durch zumindest einen der einen oder mehreren mobilen Computer möglich ist.

8. System gemäß Anspruch 7, wobei die Übertragungsdaten und die Empfangsdaten ein TCP/IP-Protokoll verwenden und wobei das Kabelnetzwerk mit dem Internet verbunden ist.

9. Ein Verfahren zur Verarbeitung von Daten, das Folgendes aufweist: Koppeln eines mobilen Computers (260), wobei der mobile Computer (260) eine erste modulare Anbringungsschnittstelle aufweist, mit einer Vorrichtung (200), die eine Batterie (230), eine Schaltung (220), die imstande ist. Radiofrequenzidentifikationsfunktionalität auszuführen, und eine zweite modulare Anbringungsschnittstelle (240), die mit der ersten modularen Anbringungsschnittstelle verbunden werden kann, umfasst; und Scannen eines Radiofrequenzidentifikations-Tags (140) zur Identifizierung von Daten; **dadurch gekennzeichnet, dass** die Vorrichtung (200) eine Sled- bzw. Schlittenvorrichtung ist, die geeignet ist, um den mobilen Computer zu halten.

10. Verfahren gemäß Anspruch 9, wobei das Scannen eines Radiofrequenzidentifikations-Tags (140) zur Identifizierung von Daten auftritt, wenn der mobile Computer (260) und der Identifikations-Tag (140) über 30,5 cm (12 Zoll) voneinander beabstandet sind.

11. Verfahren gemäß Anspruch 9 oder 10, das ferner das Übertragen der Identifikationsdaten an eine Computerkabelnetzwerk über ein drahtloses Medium aufweist.

12. Verfahren gemäß Anspruch 11, wobei das Computerkabelnetzwerk mit dem Internet verbunden ist und das Übertragen der Identifikationsdaten an ein Computerkabelnetzwerk über ein drahtloses Medium ein TCP/IP-Protokoll verwendet.

## Revendications

1. Système comprenant un dispositif (200) propre à analyser une étiquette d'identification radiofréquence (170) d'identification de données, le dispositif comprenant une batterie (230), un circuit (220) apte à réaliser une fonctionnalité d'identification radiofréquence et une seconde interface de liaison modulaire (240) ; la seconde interface de liaison modulaire étant apte à être associée avec une première interface de liaison modulaire, la première interface de liaison modulaire étant incluse dans un ordinateur mobile (260), **caractérisé en ce que** le dispositif est un dispositif en traîneau apte à maintenir l'ordinateur mobile.

2. Système selon la revendication 1, dans lequel le dispositif (200) comprend en outre :
un scanneur (270) pour analyser des codes optiques ; et
un contrôleur programmé pour commander le scanneur et en recevoir des données analysées.

3. Système selon la revendication 1, dans lequel le circuit (220) apte à réaliser une fonctionnalité d'identification radiofréquence comprend un émetteur-récepteur électromagnétique (310).

4. Système selon la revendication 3, dans lequel le circuit (220) apte à réaliser une fonctionnalité d'identification radiofréquence comprend un décodeur d'interface aérienne d'identification radiofréquence (330).

5. Système selon la revendication 1, comprenant en outre un ordinateur mobile (260), l'ordinateur mobile (260) comprenant une première interface de liaison modulaire et dans lequel l'interface de liaison modulaire (240) du dispositif (200) est une seconde interface de liaison modulaire apte à être associée avec la première interface de liaison modulaire.

6. Système selon la revendication 1, comprenant en outre au moins une étiquette d'identification radiofréquence (140) et dans lequel le dispositif (200) est apte à analyser ladite étiquette d'identification radiofréquence (140) quand le dispositif (200) et ladite au moins une étiquette d'identification radiofréquence (140) sont distantes de plus de 30,5 cm (12 pouces).

7. Système selon la revendication 1, comprenant en outre :
un réseau câblé ;
un ou plusieurs points d'accès ;
dans lequel lesdits un ou plusieurs points d'accès sont aptes à émettre des données d'émission à partir du réseau câblé vers un ou plusieurs ordinateurs mobiles par l'intermédiaire d'un milieu sans fil et à recevoir des données de réception desdits un ou plusieurs ordinateurs mobiles vers le réseau câblé par l'intermédiaire du milieu sans fil ; et
dans lequel lesdits un ou plusieurs points d'accès forment une zone de transmission, la zone de transmission incluant un espace dans lequel l'association à au moins un desdits un ou plusieurs points d'accès est possible par ledit au moins un desdits un ou plusieurs ordinateurs mobiles.

8. Système selon la revendication 7, dans lequel les données d'émission et les données de réception utilisent un protocole TCP/IP, et dans lequel le réseau câblé est connecté à Internet.

9. Procédé de traitement de données comprenant le couplage d'un ordinateur mobile (260), l'ordinateur mobile (260) incluant une première interface de liaison modulaire, à un dispositif (200) incluant une batterie (230), un circuit (220) apte à réaliser une fonctionnalité d'identification radiofréquence, et une seconde interface de liaison modulaire (240) apte à être associée avec la première interface de liaison modulaire ; et l'analyse d'une étiquette d'identification radiofréquence (140) pour rechercher des données d'identification ; **caractérisé en ce que** le dispositif (200) est un dispositif en traîneau apte à porter l'ordinateur mobile (260).

10. Procédé selon la revendication 9, dans lequel l'analyse de l'étiquette d'identification radiofréquence (140) pour une identification de données prend place quand l'ordinateur mobile (260) et l'étiquette d'identification (140) sont distants de 30,5 cm (12 pouces).

11. Procédé selon la revendication 9 ou 10, comprenant en outre les données d'identification pour un réseau informatique câblé par l'intermédiaire d'un milieu sans fil.

12. Procédé selon la revendication 11, dans lequel le réseau informatique câblé est connecté à Internet et la transmission de données d'identification à un réseau informatique câblé par l'intermédiaire d'un milieu sans fil utilise un protocole TCP/IP.
